# EUROPÄISCHE PATENTSCHRIFT

(11) **EP 1 350 144 B1**
(45) Veröffentlichungstag und Bekanntmachung des Hinweises auf die Patenterteilung: **21.12.2005**
(21) Anmeldenummer: 02702264.9
(22) Anmeldetag: 14.01.2002
(51) Int. Cl.: G05B 19/418, B23Q 15/00

(54) **BEARBEITUNGSSYSTEM UND WERKZEUGEINHEIT ZUR BEARBEITUNG VON WERKSTÜCKEN**
MACHINING SYSTEM AND TOOL UNIT FOR MACHINING WORKPIECES
SYSTEME D'USINAGE ET UNITE D'OUTIL POUR USINER DES PIECES

(30) Priorität: 12.01.2001 DE 10101310
(43) Veröffentlichungstag der Anmeldung: 08.10.2003
(73) Patentinhaber: Alfing Montagetechnik GmbH, 73433 Aalen (DE)
(72) Erfinder: GASS, Baltes, Aalen 73430 (DE)
(74) Vertreter: HOFFMANN EITLE
(86) Internationale Anmeldenummer: PCT/EP2002/000292
(87) Internationale Veröffentlichungsnummer: WO 2002/056124

(56) Entgegenhaltungen:
- EP-A- 0 825 502
- DE-A- 4 021 330
- US-A- 4 453 303
- US-A- 5 207 309
- US-A- 5 321 619
- DUGERN O V ET AL: "EINE MODULARE GRUNDSTEUERUNG FUR FLEXIBLE MONTAGEZELLEN" , AUTOMATISIERUNGSTECHNISCHE PRAXIS - ATP, OLDENBOURG VERLAG. MUNCHEN, DE, VOL. 32, NR. 1, PAGE(S) 22-29 XP000126014 ISSN: 0178-2320 Absätze [0001]-[0006]; Abbildungen 1,6

## Beschreibung

Die Erfindung betrifft ein Bearbeitungssystem zur Bearbeitung von Werkstücken, insbesondere von auf einer Fertigungsstraße angeordneten Werkstücken, sowie eine Werkzeugeinheit zur Bearbeitung eines Werkstücks mit einem elektrischen steuerbaren Bearbeitungswerkzeug. Insbesondere betrifft die Erfindung ein Bearbeitungssystem und eine Werkzeugeinheit mit den Merkmalen des Oberbegriffs des Patentanspruchs 1 bzw. des Patentanspruchs 21.

Ein derartiges Bearbeitungssystem und eine derartige Werkzeugeinheit werden typischerweise in der Montagetechnik, insbesondere bei der Automobilfertigung, eingesetzt. Ein derartiges Bearbeitungssystem und eine derartige Werkzeugeinheit finden sich jedoch auch in anderen Anwendungsgebieten, bei denen bei dem Zusammenbau eines Produkts mehrere einzelne Montageschritte nacheinander an verschiedenen Positionen durchgeführt werden, zum Beispiel bei der Serienfertigung von HiFi-Geräten etc.

Herkömmlicherweise besteht eine relativ feste Zuordnung der Bearbeitungswerkzeuge zu den Montageabschnitten oder Bearbeitungsbereichen und somit ergeben sich hierbei Probleme, wenn beispielsweise ein neuer Bearbeitungsschritt hinzugefügt und deshalb ein neues Werkzeug bei der sequentiellen Bearbeitung eingeführt werden muss. Gleichermaßen ergeben sich Probleme, wenn lediglich die Bearbeitungsreihenfolge der einzelnen Bearbeitungsschritte geändert werden soll. Mit herkömmlichen im Kabelschlepp arbeitenden Bearbeitungswerkzeugen ist dies nicht oder nur sehr umständlich möglich und die Erfindung bezieht sich insbesondere auf ein Bearbeitungssystem und ein Bearbeitungswerkzeug, welche diese Probleme beseitigen können.

Die voranstehend erwähnten Probleme werden nachstehend im Zusammenhang mit den beigefügten Figuren näher erläutert.

### HINTERGRUND DER ERFINDUNG

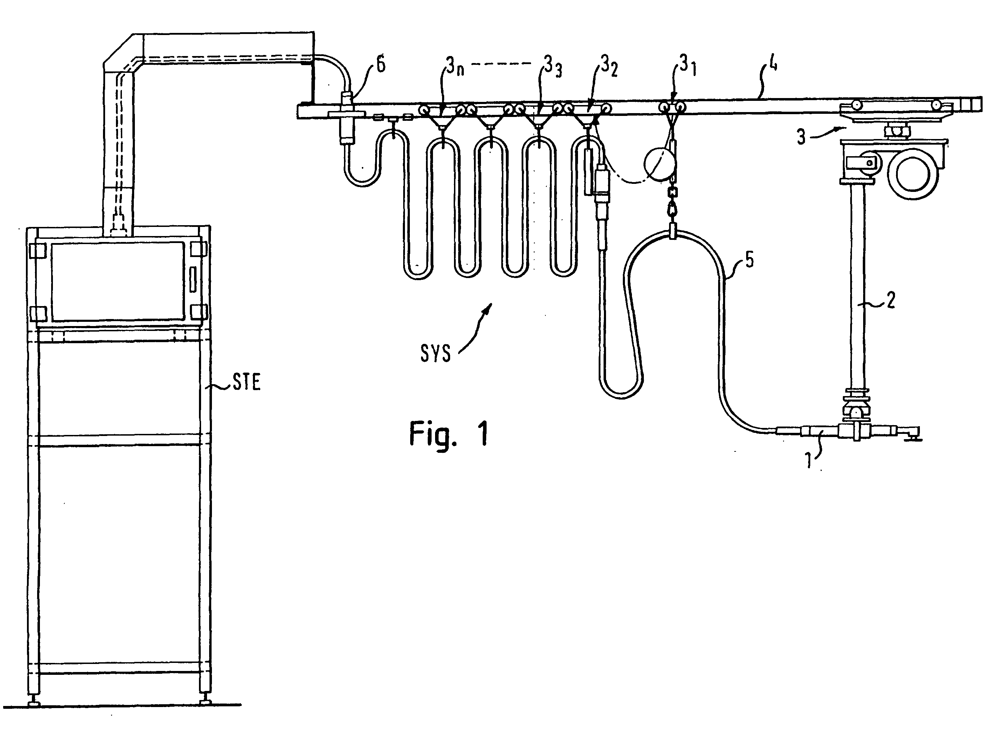

Wie in Fig. 1 gezeigt ist es derzeit in der Montagetechnik üblich ein Bearbeitungswerkzeug, insbesondere ein handgeführtes elektrisch steuerbares Bearbeitungswerkzeug wie einen Einfachschrauber oder einen Mehrfachschrauber 1, über eine Verbindungsstange 2 mit einer Halteeinheit 3 zu verbinden, die in einer Verschiebhalteeinrichtung 4 aufgenommen ist, wobei die Halteeinheit 3 verschiebbar in der Verschiebehalteeinrichtung 4 bewegbar ist. Bei der Halteeinheit 3 handelt es sich üblicherweise um einen Laufkasten oder eine Laufkatze, die mit einigen Rollen versehen ist, die in eine Laufschiene mit beispielsweise U-förmigem Profil eingehängt sind, die als Verschiebehalteeinrichtung 4 verwendet wird.

Wie schematisch in Fig. 1 dargestellt muss das Bearbeitungswerkzeug 1 natürlich mit Energie versorgt werden, wofür eine Kabelschleppeinrichtung 3₁, 3₂, 3₃ ... 3ₙ verwendet wird. Typischerweise wird das an sich bei der Bearbeitung störende Kabel 5 für die Energiezuführung in Kabelhalteeinheiten 3₁, 3₂, 3₃ ... 3ₙ eingehängt, die ebenfalls in der Laufschiene 4 angeordnet sind. Das Bezugszeichen 6 in Fig. 1 bezeichnet eine Endbefestigung des Kabels 5 bevor dieses an eine Steuereinheit STE für das Bearbeitungswerkzeug geführt wird. Über die KabelschleppEinrichtung werden nicht nur die Energiezuführungsleitungen geführt, sondern auch Steuerleitungen und Datenleitungen, da die Steuereinheit STE das Bearbeitungswerkzeug auf vorgegebene Bearbeitungsparameter zur Ausführung eines vorgegebenen Bearbeitungsvorgangs einstellt und unter Umständen auch Rückmeldungen von dem Bearbeitungswerkzeug 1 an die Steuereinheit STE durchgeführt werden müssen, zum Beispiel Informationen über das abschließend erzielte Drehmoment an festgezogenen Schrauben.

Ferner ist die Laufschiene 4 natürlich nicht auf eine rein gerade Konfiguration beschränkt, wie in Fig. 1 gezeigt, sondern auch gebogene Ausbildungen sind denkbar, so dass das Bearbeitungswerkzeug auch kurvenförmig entlang der Laufschiene 4 bewegbar ist.

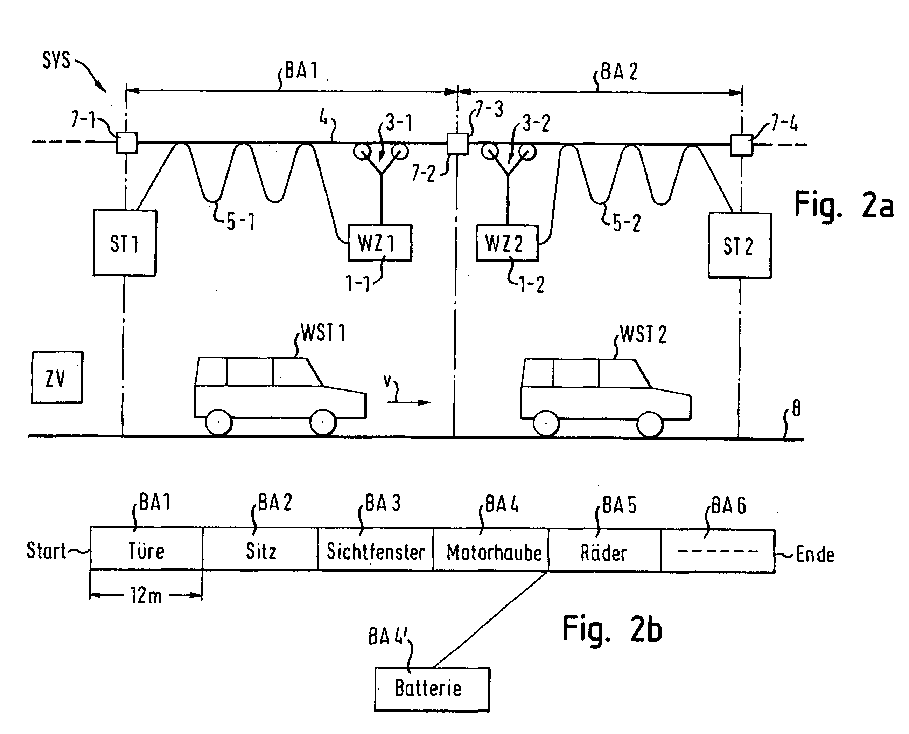

Natürlich wird in einer Montagestraße nicht nur ein einzelnes Bearbeitungswerkzeug, wie in Fig. 1 gezeigt, benötigt, sondern typischerweise werden mehrere Bearbeitungswerkzeuge 1-1, 1-2 abschnittsweise BA1, BA2 in eine Laufschiene 4 eingehängt, wie in Fig. 2a gezeigt. In Fig. 2a bezeichnet das Bezugszeichen 8 ein sich bewegendes Band, WST1, WST2 Werkestücke, beispielsweise Fahrzeuge, die sich mit einer vorgegebenen Geschwindigkeit v von einem Bearbeitungsbereich BA1 zu einem anderen Bearbeitungsbereich BA2 bewegen, die Bezugszeichen 3-1, 3-2 bezeichnen die bereits in Fig. 1 gezeigten Halteeinheiten (Laufkatzen) und die Bezugszeichen 5-1, 5-2 bezeichnen die jeweiligen Kabel zwischen den Bearbeitungswerkzeugen 1-1, 1-2 und den jeweiligen Steuereinheiten ST1, ST2. Wie in Fig. 2a gezeigt ist die gesamte Montage in Bearbeitungsabschnitte oder Bearbeitungsbereiche BA1, BA2 etc. unterteilt, wobei jedes Bearbeitungswerkzeug 1-1, 1-2 nur in dem jeweiligen ihm zugeordneten Bearbeitungsbereich entlang der Schiene 4 bewegbar sein soll. Dafür werden Bereichsüberschreitungsdetektoren für eine minimale Warngrenze 7-1 und eine maximale Warngrenze 7-2 bzw. 7-4 und 7-3 vorgesehen, so dass ein Alarm ausgegeben wird, wenn die Werkzeuge die Bereiche verlassen. Ferner ist es möglich, Detektoren vorzusehen, die dann, wenn eine drastische Bereichsüberschreitung stattfindet, einen Bandstopp des Fertigungsbands 8 veranlassen. Die Steuereinheiten ST1, ST2 können auch von einer Zentralverarbeitungseinrichtung ZV, beispielsweise über Funk oder Infrarot oder über Kabel gemeinsam gesteuert werden.

Beispielsweise wird in einem Bearbeitungsbereich BA1 in Fig. 2a eine Türe montiert, so dass die Steuereinheit ST1 das Werkzeug 1-1, WZ1 auf vorgegebene Parameter für die Befestigung von Schrauben an den Türen einstellt. Im Bearbeitungsbereich BA2 wird beispielsweise mit dem Werkzeug 1-2, WZ2 ein Kofferraumdeckel montiert, so dass die Steuereinheit ST2 das Bearbeitungswerkzeug 1-2, WZ2 auf entsprechende Parameter dafür einstellt. In der Automobiltechnik beträgt die Länge der jeweiligen Bearbeitungsabschnitte beispielsweise 6m bis 12m.

In Fig. 2a lässt sich bereits ein grundlegendes Problem eines derartigen Bearbeitungssystems SYS des Standes der Technik erkennen. Da die Kabelschleppeinrichtung 5-1, 5-2 ebenfalls über Laufkatzen in die Schiene 4 eingehängt werden muss, muss bei der Bedienung des jeweiligen Werkzeugs jeweils der gesamte Kabelbaum hin und her bewegt werden, was sehr Bediener-unfreundlich ist. Zudem müssen, wenn ein weiteres Bearbeitungswerkzeug eingeführt werden soll, zum Beispiel wenn der Bearbeitungsabschnitt BA2 in zwei weitere Unterabschnitte unterteilt werden soll, die gesamten Laufkatzen des Kabelschlepps sowie der Halteeinrichtung ausgewechselt werden, was extrem aufwendig ist. Dabei ist es unter Umständen auch erforderlich, die Links-Rechts-Anordnung von Werkzeug und Steuereinheit zu vertauschen, so dass sich auch deshalb eine Notwendigkeit ergeben kann den gesamten Kabelschlepp sowie die Halteeinheiten 3-1, 3-2 aus der Laufschiene 4 herauszunehmen. Ferner müssen die Endschalter, d.h. die Bereichsüberschreitungsdetektoren 7-1 ... 7-4 an der Laufschiene neu eingerichtet werden. Jedes Bearbeitungswerkzeug benötigt zudem einen einzelnen Kabelbaum. Alternativ, wenn eine flexible Verwendung von Werkzeugen und ein flexibler Wechsel von Werkzeugen vorgesehen werden soll, müsste eine parallele neue Schiene angeordnet werden, mit neuen Werkzeugen.

Das Einfügen von neuen Werkzeugen bzw. von neuen Bearbeitungsabschnitten oder Bearbeitungsbereichen wird generell als "Umtakten" der Montagestraße bezeichnet. Dies wird näher in Fig. 2b erläutert. Die gesamte Montagestraße ist in einer Anzahl von Bearbeitungsabschnitten BA1 ... BA6 unterteilt, wobei in jedem Bearbeitungsabschnitt ein definierter Bearbeitungsvorgang ausgeführt werden soll, zum Beispiel das Festschrauben der Türe, des Sitzes, des Sichtfensters, der Motorhaube, der Räder etc. Pro Bearbeitungsabschnitt BA1 ... BA6 sind typischerweise sogar zwei oder mehrere Bearbeitungswerkzeuge 1-1, 1-2 vorgesehen, d.h. in jedem in Fig. 2b gezeigten Bearbeitungsbereich kann die Anordnung in Fig. 2a einmal vorhanden sein.

Wenn beispielsweise die Reihenfolge der Schritte BA1 ... BA6 verändert werden soll, zum Beispiel derart, dass die Motorhaube vor dem Sichtfenster montiert werden soll, so muss die Reihenfolge von BA4 mit BA3 vertauscht werden. Dies wird als Umtakten des Bearbeitungssystems SYS bezeichnet. Wie voranstehend erläutert muss dabei das Werkzeug mit seiner Halteeinheit sowie der gesamte Kabelschlepp ausgetauscht werden, was äußerst umständlich ist.
Wenn ein neuer Takt eingeführt werden soll, beispielsweise die Befestigung einer Batterie im Bearbeitungsschritt BA4' zwischen der Befestigung der Motorhaube und der Räder in den Bearbeitungsschritten BA4, BA5, so müssen sämtliche aufgehängten Kabel beiseite geschoben werden oder eine neue Schiene in einem zusätzlichen Takt eingeführt werden. Dabei müssen auch wiederum die Positionsüberschreitungsdetektoren neu eingerichtet werden. Das Umtakten sowie die Erweiterung einer Montagestrecke ist also sehr aufwendig und der Kabelschlepp ist Bediener-unfreundlich.

### ZUSAMMENFASSUNG DER ERFINDUNG

Wie voranstehend unter Bezugnahme auf die Fig. 1 und auf die Fig. 2a, 2b erläutert ist es im Stand der Technik nicht einfach möglich ein Umtakten oder eine Erweiterung der Montagestrecke vorzunehmen, im wesentlichen deshalb, weil die jeweiligen Werkzeugeinheiten mechanisch relativ fixiert den einzelnen Bearbeitungsabschnitten zugeordnet sind und ein Austausch nicht leicht möglich ist.

Die Aufgabe der Erfindung besteht darin ein Bearbeitungssystem und eine Werkzeugeinheit bereitzustellen, die eine einfache Umtaktung bzw. Erweiterung einer Montagestraße mit Werkzeugeinheiten in einer einfachen und Bediener-freundlichen Weise ermöglicht.

Diese Aufgabe wird gelöst durch ein Bearbeitungssystem (Anspruch 1) zur Bearbeitung von Werkstücken, insbesondere von auf einer Fertigungsstraße angeordneten Werkstücken, umfassend: eine Vielzahl von Werkzeugeinheiten jeweils mit einem elektrischen steuerbaren Bearbeitungswerkzeug und einer Halteeinheit; eine Verschiebehalteeinrichtung, in der die Halteeinheiten sequentiell aufgenommen sind, wobei die Halteeinheiten in der Verschiebeeinrichtung verschiebbar aufgenommen sind; und eine Vielzahl von Steuereinheiten jeweils zur Einstellung eines jeweiligen Bearbeitungswerkzeugs auf einen Satz von vorgegebenen Bearbeitungsparametern zur Ausführung eines vorgegebenen Bearbeitungsvorgangs; wobei jede Werkzeugeinheit eine Positionsbestimmungseinheit umfasst, die die Position der jeweiligen Werkzeugeinheit entlang der Verschiebehalteeinrichtung bestimmt; die Steuereinheit Teil der Werkzeugeinheit ist; und die Steuereinheit die Einstellung des jeweiligen Bearbeitungswerkzeugs auf einen jeweiligen Bearbeitungsparametersatz in Abhängigkeit von der durch die Positionsbestimmungseinheit bestimmten Position der Werkzeugeinheit vornimmt.

Diese Aufgabe wird auch gelöst durch eine Werkzeugeinheit (Anspruch 21) eines Bearbeitungssystems zur Bearbeitung von Werkstücken, insbesondere von auf einer Fertigungsstraße angeordneten Werkstücken, umfassend ein elektrisch steuerbares Bearbeitungswerkzeug; und eine Halteeinheit zur Aufnahme in eine Verschiebehalteeinrichtung des Bearbeitungssystems; wobei eine Steuereinheit vorgesehen ist, zur Einstellung des Bearbeitungswerkzeugs auf einen Satz von vorgegebenen Bearbeitungsparametern zur Ausführung eines vorgegebenen Bearbeitungsvorgangs; jede Werkzeugeinheit eine Positionsbestimmungseinheit umfasst, die die Position der jeweiligen Werkzeugeinheit entlang der Verschiebehalteeinrichtung bestimmt; und die Steuereinheit die Einstellung des jeweiligen Bearbeitungswerkzeugs auf einen jeweiligen Bearbeitungsparametersatz in Abhängigkeit von der durch die Positionsbestimmungseinheit bestimmten Position der Werkzeugeinheit vornimmt.

Erfindungsgemäß werden Werkzeugeinheiten über ihre jeweilige Halteeinheit in die Verschiebehalteeinrichtung eingehängt, wobei jede Werkzeugeinheit autonom ihre Position entlang der Verschiebehalteeinrichtung bestimmen kann. Eine Steuereinrichtung, die ein Teil dieser einhängbaren Werkzeugeinheit ist, arbeitet direkt mit der Positionsbestimmungseinheit zusammen und stellt das Bearbeitungswerkzeug in Abhängigkeit von der Position auf bestimmte Bearbeitungsparameter ein. Bei einer Umtaktung müssen somit lediglich andere Parametersätze in der jeweiligen Steuereinheit der Werkzeugeinheit vorgegeben werden. Bei einer Erweiterung muss lediglich die Zuordnung von Bearbeitungsparametersatz und Positionsbereich neu eingestellt werden.

### VORTEILHAFTE AUSFÜHRUNGSFORMEN

Vorzugsweise (Anspruch 2, 22) sind in den jeweiligen Steuereinheiten eine Vielzahl von Bearbeitungsparametersätzen jeweils bestimmten Positionsbereichen zugeordnet, so dass lediglich durch die Verschiebung der jeweiligen Werkzeugeinheit eine andere Bearbeitungsaufgabe zugeordnet werden kann.

Eine Zentralverarbeitungseinheit (Anspruch 4) kann vorgesehen werden, um bei Einfügung einer neuen Werkzeugeinheit die Bearbeitungsparametersätze und/oder die Positionsbereiche in den jeweiligen Steuereinheiten der Werkzeugeinheiten neu zu konfigurieren. Damit wird zentral eine Neuumtaktung des gesamten Systems ermöglicht, ohne dass es einem Austausch der Werkzeugeinheiten bedarf.

Obwohl die Werkzeugeinheiten mit einem herkömmlichen Kabelschlepp versehen sein können, um Energie an die Steuereinheiten zuzuführen, umfasst eine weitere Ausführungsform des Bearbeitungssystems (Anspruch 5) eine Energiezuführungseinrichtung zur Zuführung von Energie an die jeweiligen Steuereinheiten, wobei die Energiezuführungseinrichtung Teil der Verschiebehalteeinrichtung ist und die Verschiebehalteeinrichtung und die Halteeinheiten so ausgebildet sind, dass die elektrische Energie unabhängig von der Position der Werkzeugeinheit mindestens an die Steuereinheit der Werkzeugeinheiten geliefert wird. Das heißt, vorzugsweise wird die Energiezuführung über die Verschiebehalteinrichtung vorgenommen, so dass es eines Kabelschlepps im herkömmlichen Sinn nicht bedarf.

Vorzugswiese ist die Verschiebehalteinrichtung eine Laufschiene und die Halteeinheit der jeweiligen Werkzeugeinheit ist ein in die Halteschiene eingehängter Laufkasten (Anspruch 6), wobei in die Laufschiene ein Stromleiter integriert ist und die Laufkästen eine Stromabnehmereinrichtung umfassen, um Strom an die jeweilige Steuereinheit von dem Stromleiter abzunehmen und zuzuführen (Anspruch 7, 23, 24). Somit wird jede Werkzeugeinheit völlig unabhängig von irgendwelchen Kabeln, insbesondere unabhängig von der Energiezuführung über Kabel.

Ferner ist es vorteilhaft in die Laufschiene eine integrierte Datenleitung oder integrierte Datenschiene einzubauen (Anspruch 18), wobei der jeweilige Laufkasten der Werkzeugeinheit eine Datenabnahmeeinrichtung umfasst, um Daten von der Datenschiene abzunehmen und an die jeweilige Steuereinheit der Werkzeugeinheit zu führen. Somit kann ein bidirektionale Datenkommunikation zwischen den jeweiligen Steuereinheiten und der Zentralverarbeitungseinheit vorgenommen werden, ohne dass irgendwelche Kabel gezogen werden müssen.

Es ist jedoch auch möglich (Anspruch 17), die Datenkommunikation zwischen den Steuereinheiten und der Zentralverarbeitungseinheit über eine Funkschnittstelle oder eine Infrarotschnittstelle auszuführen. Ferner ist es möglich, dass Datensignale für die Datenkommunikation zwischen der Zentralverarbeitungseinheit und der Steuereinheit über Kommunikationssignale vorgenommen wird, die auf die Stromschiene moduliert sind (Anspruch 19).

Ferner ist es vorteilhaft, dass die Steuereinheit eine Alarmeinrichtung umfasst, die einen Alarm ausgibt, wenn die Steuereinheit aufgrund der von der Positionsbestimmungseinrichtung bestimmten Position bestimmt, dass eine Positionsbereichsüberschreitung stattgefunden hat (Anspruch 29, 30).

Die Positionsbestimmungseinrichtung bestimmt vorzugsweise die relative Entfernung zu einem Bezugspunkt entlang der Verschiebehalteinrichtung (Anspruch 8, 25).

Wenn die Laufschienen oder ein Teil der Laufschiene aus einem leitfähigen Material gebildet ist, zum Beispiel einem leitfähigen Kunststoff, so kann die jeweilige Positionsbestimmungseinrichtung die Positionsbestimmung von dem Anfangspunkt der Schiene als Bezugspunkt mittels einer Spannungsabfallmessung bestimmen (Anspruch 9, 26).

Ferner kann in die Laufschiene ein Widerstandsmessstreifen integriert sein, so dass lediglich der Widerstand entlang der Stromschiene gemessen werden muss (Anspruch 10, 26).

Ferner ist es möglich, dass die Positionsbestimmungseinrichtung die Position zu einem bestimmten Bezugspunkt, beispielsweise dem Anfang der Schiene, mittels einer Laserentfernungsmessung ausführt (Anspruch 11, 27).

Das Bearbeitungssystem kann ferner eine Werkstückpositions-Bestimmungseinrichtung umfassen, um die Position der jeweiligen Werkstücke auf der Fertigungsstraße zu bestimmen (Anspruch 12). Die Werkstückpositions-Bestimmungseinrichtung kann eine Werkstückgeschwindigkeits-Erfassungseinrichtung umfassen (Anspruch 13), um die Position eines Werkstücks bestimmen zu können.

Ferner ist es möglich, dass die Zentralverarbeitungseinrichtung Energie an die Energiezuführungseinrichtung der Verschiebehalteeinrichtung liefert (Anspruch 14), wobei entweder die Zentralverarbeitungseinrichtung oder jede Werkzeugeinheit einen Spannungswandler umfassen kann (Anspruch 15, 16). Mit der letzteren Ausführungsform wird eine vorgegebene Spannung an jede Steuereinheit geliefert, die dann die Spannung in die jeweils für das Bearbeitungswerkzeug notwendige Spannung umwandelt.

Weitere vorteilhafte Ausführungsformen und Verbesserungen der Erfindung sind in den Unteransprüchen angegeben. Ferner sei darauf hingewiesen, dass die Erfindung auch weitere Ausführungsformen umfasst, die sich aus einer Kombination von Merkmalen ergeben, die getrennt in den Patentansprüchen und/oder der Figurenbeschreibung aufgeführt sind.

Nachstehend wird die Erfindung anhand ihrer vorteilhaften Ausführungsformen unter Bezugnahme auf die Zeichnungen näher erläutert.

### KURZBESCHREIBUNG DER ZEICHNUNGEN

In den Zeichnungen bezeichnen die gleichen oder ähnlichen Bezugszeichen gleiche oder ähnliche Teile. In den Zeichnungen zeigen:
- Fig. 1: ein herkömmliches Bearbeitungssystem mit einer Werkzeugeinheit im Kabelschlepp;
- Fig. 2a: die Anordnung von mehreren Werkzeugeinheiten in verschiedenen Bearbeitungsabschnitten gemäß dem Stand der Technik;
- Fig. 2b: eine Erläuterung der Umtaktung und Einfügung von weiteren Bearbeitungsschritten in einer Montagestraße;
- Fig. 3: ein Überblicksdiagramm des erfindungsgemäßen Bearbeitungssystems mit erfindungsgemäßen Werkzeugeinheiten; und
- Fig. 4: eine Ausführungsform der erfindungsgemäßen Werkzeugeinheit bzw. der Verschiebehalteeinrichtung des Bearbeitungssystems.

### PRINZIP DER ERFINDUNG

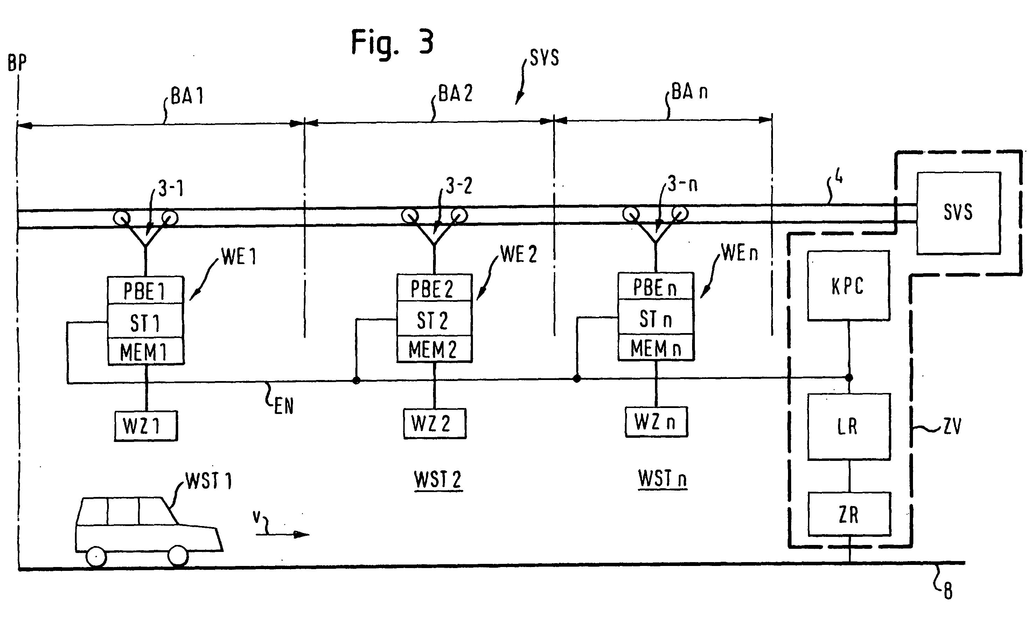

Fig. 3 zeigt ein Blockdiagramm des erfindungsgemäßen Bearbeitungssystems SYS. Das Bearbeitungssystem SYS ist für die Bearbeitung von Werkstücken WST1, insbesondere von auf einer Fertigungsstraße 8 angeordneten Werkstücken WST1, vorgesehen. Es umfasst eine Vielzahl von Werkzeugeinheiten WE1, WE2, ..., WEn und eine Verschiebehalteeinrichtung 4.

Jede Werkzeugeinheit WE1, WE2, ..., WEn gemäß der Erfindung umfasst eine Halteeinheit 3-1, 3-2, ..., 3n, die jeweils in der Verschiebehalteeinrichtung 4 verschiebbar und sequentiell aufgenommen sind. Ferner sind eine Vielzahl von Steuereinheiten ST1, ST2, ..., STn vorgesehen, um die jeweiligen Bearbeitungswerkzeuge WZ1, WZ2, WZn auf einen vorgegebenen Satz von Bearbeitungsparametern zur Ausführung eines vorgegebenen Bearbeitungsvorgangs einzustellen. Derartige Bearbeitungsparameter sind beispielsweise ein vorgegebenes Drehmoment für einen Einfach- oder Mehrfachschrauber, zum Beispiel zum Anziehen von Schrauben an bestimmten Teilen einer Automobilkarosserie.

Wie in Fig. 3 gezeigt, ist auch das Bearbeitungssystem SYS gemäß der Erfindung in einzelne Takte oder Bearbeitungsabschnitte BA1, BA2, ..., BAn aufgeteilt, wobei in jedem Bearbeitungsabschnitt ein oder mehrere Werkzeugeinheiten WE vorhanden sein können. Jedem Bearbeitungsabschnitt bzw. jedem Bearbeitungswerkzeug ist dabei ein bestimmter Bearbeitungsvorgang zugeordnet, der auch aus mehreren Arbeitsgängen bestehen kann, zum Beispiel das Anziehen von Schrauben an einem Zylinderkopf sowie das Montieren des Zylinderkopfs in der Automobilkarosserie. Wie in einer Fertigungsstraße üblich, bewegen sich die Werkstücke WST1, z.B. Automobilkarosserien, auf der Fertigungsstraße 8 mit einer vorgegebenen Geschwindigkeit v.

Gemäß der Erfindung, im Gegensatz zu der in Fig. 1 gezeigten Werkzeugeinheit, umfasst die erfindungsgemäße Werkzeugeinheit WE1, WE2, ..., WEn die Halteeinheit 3-1, 3-2, ..., 3n, eine Positionsbestimmungseinheit PBE1, PBE2, ..., PBEn, die die Position der jeweiligen Werkzeugeinheit entlang der Verschiebehalteeinrichtung 4 bestimmt, und die Steuereinheit ST1, ST2, ..., STn selbst ist Teil der jeweiligen Werkzeugeinheit. Die Steuereinheit stellt die jeweiligen Bearbeitungswerkzeuge auf einen jeweiligen Bearbeitungsparametersatz in Abhängigkeit von der durch die Positionsbestimmungseinheit bestimmten Position der Werkzeugeinheit ein. Dafür sind in der Steuereinheit ST1, ST2, ..., STn jeweils ein Speicher MEM1, MEM2, ..., MEMn vorgesehen, in denen ein oder mehrere Bearbeitungsparametersätze gespeichert sind. Diese Bearbeitungsparametersätze sind jeweils bestimmten Positionsbereichen der Werkzeugeinheit entlang der Verschiebehalteeinrichtung 4 zugeordnet. Derartige Bearbeitungsparametersätze können zum Beispiel von der Zentralverarbeitungseinheit ZV über eine Netzverbindung EN (beispielsweise ein Ethernet) eingestellt werden. So kann die Zentralverarbeitungseinheit beispielsweise beim Umtakten der Bearbeitungsabschnitte BA1, BA2, ..., BAn oder bei der Erweiterung der Bearbeitungsabschnitte, beispielsweise der Hinzufügung eine Werkzeugeinheit oder der Hinzufügung eines Bearbeitungsabschnitts, die Bearbeitungsparametersätze und/oder die Positionsbereiche neu konfigurieren.

Das heißt, über die Positionsbestimmungseinheit wird die Position des Werkzeugs erkannt und somit können Bearbeitungsbereiche mit Min/Max-Grenzen für einen Bandstopp oder einer Alarmausgabe festgelegt werden. Zum Beispiel umfasst die Werkzeugeinheit auch eine Alarmeinrichtung in der Steuereinheit zur Ausgabe eines Alarms, wenn die Steuereinheit aufgrund der von der PositionsbestimmungsEinrichtung PBE bestimmten Position bestimmt, dass eine Positionsbereichsüberschreitung stattgefunden hat. Da aber die Positionsmessung autonom von der jeweiligen Werkzeugeinheit durchgeführt wird, ist es nicht erforderlich, mechanische Anschläge an der Verschiebehalteeinrichtung 4 vorzusehen.

Natürlich benötigt auch das Bearbeitungssystem SYS der Fig. 3 eine Energiezuführungseinrichtung zur Zuführung von Energie jeweils an die Steuereinheiten, im einfachsten Fall auch über einen Kabelschleppmechanismus. In vorteilhafter Weise ist erfindungsgemäß die Energiezuführungseinrichtung Teil der Verschiebehalteeinrichtung 4 und die Verschiebehalteeinrichtung 4 und die Halteeinheiten 3-1, 3-2, ..., 3n sind so ausgebildet, dass die elektrische Energie unabhängig von der Position der Werkzeugeinheit mindestens an die Steuereinheit der Werkzeugeinheiten geliefert wird. Das heißt, eine Stromversorgung SVS ist mit der Verschiebehalteeinrichtung 4 bzw. mit der Energiezuführungseinrichtung der Verschiebehalteeinrichtung 4 verbunden und liefert Energie zumindest an die Steuereinheit ST1, ST2, STn. Je nach Spannung der Stromversorgung SVS kann eine getaktete Stromversorgung bzw. ein Trafo in den Steuereinheiten ST1, ST2, ..., STn vorgesehen sein, um die zugeführte Energie (Spannung) in eine für das jeweilige Bearbeitungswerkzeug WZ1, WZ2, WZn geeignete Spannung umzuwandeln.

Es ist jedoch auch möglich, dass ein zentraler Trafo in der Stromversorgung SVS vorgesehen wird, so dass dann über die Energiezuführungseinrichtung der Verschiebehalteeinrichtung 4 eine Spannung mit einem geänderten Pegel übertragen wird, so dass in den jeweiligen Steuereinheiten ST1, ST2, ..., STn lediglich eine getaktete Stromversorgung vorgesehen werden muss.

Typischerweise arbeiten die Bearbeitungswerkzeuge mit einer Gleichspannung von 160V, so dass in diesem Fall von der zentralen Stromversorgung SVS eine Spannung von lediglich 110 V (abwärts gewandelt durch den Trafo) über die Verschiebehalteeinrichtung 4 übertragen wird und dann in den jeweiligen Steuereinheiten die Umwandlung von 110V → 160 V stattfindet.

Deshalb kann ein Spannungswandler in der Stromversorgungseinrichtung SVS oder in den jeweiligen Steuereinheiten ST1, ST2, ..., STn angeordnet werden, wobei die Anordnung des Spannungswandlers in der Stromversorgung SVS besonders bevorzugt ist, da eine niedrigere Spannung über die Verschiebehalteeinrichtung 4 bzw. deren Energiezuführungseinrichtung übertragen werden kann.

Wie sich der vorangehenden Beschreibung entnehmen lässt, löst die voranstehend beschriebene Werkzeugeinheit und das Bearbeitungssystem mit derartigen Werkzeugeinheiten, die eine Halteeinheit, eine Steuereinheit, eine Positionsbestimmungseinheit und ein Bearbeitungswerkzeug umfassen, bereits ohne die spezielle Ausbildung der Energiezuführungseinrichtung die Aufgabe der Erfindung. Während es beim Stand der Technik beim Umtakten erforderlich war, die einzelnen Bearbeitungseinheiten in den einzelnen Bearbeitungsabschnitten auszutauschen, können erfindungsgemäß die einzelnen Bearbeitungseinheiten ihre absolute Position entlang der einzelnen Bearbeitungsabschnitte beibehalten, wobei einfach durch die Zuordnung von neuen Bearbeitungsparametersätzen ein anderer Bearbeitungsvorgang ausgeführt werden kann. Dies gilt gleichermaßen, wenn das Bearbeitungssystem um eine oder mehrere Werkzeugeinheiten erweitert werden sollte.

Wenn beispielsweise zwischen BA1 und BA2 eine weitere Werkzeugeinheit bzw. ein weiterer Bearbeitungsschritt eingeführt werden soll, so ist es lediglich erforderlich, eine weitere Werkzeugeinheit am Punkt BP auf die Verschiebehalteeinrichtung 4 aufzureihen und dann eine erneute Zuordnung von Bearbeitungsvorgängen und Positionsbeziehungen einzurichten. So übernimmt zum Beispiel die neu aufgeschobene Werkzeugeinheit die nun die Erste auf der linke Seite ist, die Funktion von WE1 und der WE1 wird die Funktion der neu einzufügenden Einheit zugewiesen.

Es ist natürlich insbesondere vorteilhaft, wenn die Energiezuführung sowie die Datenkommunikation mit der Zentralverarbeitungseinrichtung ZV ebenfalls über die Verschiebehalteeinrichtung 4 vorgenommen wird. Bei den Bearbeitungswerkzeugen kann es sich beliebig um handgeführte Einzelwerkzeuge oder Mehrfachbearbeitungswerkzeuge handeln.

Eine weitere vorteilhafte Ausführungsform der Erfindung besteht darin, dass die Zentralverarbeitungseinrichtung ZV, die einen Zentralrechner ZR, einen Leitrechner LR und einen Koppel-PC KPC umfasst, mit der Fertigungsstraße 8 in Kommunikation steht, wobei eine Werkstückpositions-Bestimmungseinrichtung vorgesehen ist, um die Position der jeweiligen Werkstücke WST auf einer Fertigungsstraße, über der die Verschiebehalteeinrichtung 4 vorgesehen ist, zu bestimmen.

Die Werkstückpositions-Bestimmungseinrichtung kann beispielsweise eine Werkstückgeschwindigkeits-Erfassungseinrichtung zur Erfassung der Werkstückgeschwindigkeit v umfassen, so dass beispielsweise der Eintritt des Werkstücks in den Bearbeitungsbereich BA1 erfasst wird und dann über die Geschwindigkeitsmessung die jeweilige Position des Werkstücks entlang des Transportsystems 8 bestimmt werden kann. Somit kann erkannt werden, in welchem Bearbeitungsbereich BA1, BA2, ..., BAn sich die jeweiligen Werkstücke WST1, WST2, ..., WSTn befinden und mit dieser Information kann die Zentralverarbeitungseinrichtung ZV gezielte Prozessvorgaben, d.h. eine gezielte Einstellung von Bearbeitungsparametersätzen, in den jeweiligen Steuereinheiten vornehmen, so dass die entsprechenden Positionsbeziehungen für die jeweiligen Werkzeugeinheiten in Abhängigkeit von dem sich bewegenden Werkstück vorgegeben werden können. Damit lässt sich auch eine Prozessabsicherung aufrechterhalten, z.B. wenn über die Datenleitung EN von den Werkzeugeinheiten bzw. von deren Steuereinheiten Rückmeldungen an die Zentralverarbeitungseinrichtung vorgenommen werden. Beispielsweise lassen sich über die bidirektionale Datenkommunikation von der Zentralverarbeitungseinrichtung ZV auch Information über Prozessvorgaben an die Steuereinheiten, Qualitätsdaten und Werkstückkenndaten übertragen.

### WEITERE AUSFÜHRUNGSFORMEN

Wie voranstehend beschrieben, ist es gemäß des erfindungsgemäßen Bearbeitungssystems SYS mit den erfindungsgemäßen Werkzeugeinheiten WE1, WE2, ..., WEn, die Halteeinheiten, eine Steuereinheit mit einer Positionsbestimmungseinrichtung und Bearbeitungswerkzeuge umfassen, möglich, durch die Hinzufügung einer Energiezuführungseinrichtung und einer Datenkommunikationseinrichtung zu der Verschiebehalteeinrichtung 4 ein Montagesystem nachzurüsten oder bei einer Neuinstallation nur mit einer integrierten Verschiebehalteeinrichtung zu arbeiten.

Ferner ist es möglich, mehrere Werkzeuge bzw. Werkzeugeinheiten für einen Bearbeitungsbereich vorzusehen, da keine störenden Kabelschleppeinrichtungen vorhanden sind. Ferner können die Montagelinien einfach erweitert und umgetaktet werden und eine Prozessabsicherung kann bereitgestellt werden, da zu jedem Zeitpunkt bekannt ist, in welchem Bearbeitungsbereich sich ein Werkstück befindet, wobei das jeweilige Bearbeitungswerkzeug mit Parametersätzen voreingestellt wird, die für einen bestimmten Bearbeitungsvorgang erforderlich sind. Nachstehend werden spezielle Ausführungsformen der verschiedenen Einheiten und Einrichtungen beschrieben, die voranstehend erwähnt wurden.

In vorteilhafter Weise handelt es sich bei der Verschiebehalteeinrichtung 4 um eine Laufschiene, wobei die Halteeinheit 3-1, 3-2, 3-n ein in die Halteschiene eingehängter Laufkasten oder Laufkatze ist. Als Stromzuführungseinrichtung kann in die Laufschiene 4 ein Stromleiter integriert sein, wobei die Laufkästen eine Stromabnahmeeinrichtung umfassen, um Strom/Spannung an die jeweilige Steuereinheit abzunehmen und zuzuführen. Insbesondere ist die integrierte Stromschiene vorteilhaft, da ein zentraler Trafo in der Stromversorgungseinrichtung SVS vorgesehen werden kann und damit der in jeder Steuereinheit im Stand der Technik vorhandene Transformator entfällt.

Mehrere Ausführungsformen sind für die Positionsbestimmungseinheit möglich. Die Positionsbestimmungseinrichtung kann die relative Entfernung zu einem Bezugspunkt entlang der Laufschiene 4 bestimmen. Ein derartiger Bezugspunkt BP kann beispielsweise der Anfang der Laufschiene 4 sein, wie in Fig. 3 gezeigt. Ferner kann die Positionsbestimmungseinrichtung aber auch relative Entfernungen zu anderen Werkzeugeinheiten oder relative Abstände zu Endpunkten der jeweiligen Bearbeitungsbereiche BA1, BA2, ..., BAn bereitstellen.

Vorzugsweise ist zumindest ein Teil oder die gesamte Laufschiene aus einem leitfähigen Material, beispielsweise einem leitfähigen Kunststoff, gebildet, wobei für die Positionsbestimmung die Zentralverarbeitungseinrichtung ZV eine gegebene Mess-Spannung an den leitenden Teil anlegt und die jeweiligen Positionsbestimmungseinrichtungen zur Positionsbestimmung den Spannungsabfall entlang der Stromschiene messen (wenn der Widerstand der Stromschiene bekannt ist).
Alternativ kann in die Laufschiene 4 auch ein Widerstandsmessstreifen integriert sein, wobei die Positionsbestimmungseinrichtung die Positionsbestimmung über den erfassten Widerstand entlang der Stromschiene 4 vornimmt. Es ist auch möglich, die Positionsbestimmung über eine Laserentfernungsmessung vorzunehmen, bei der eine in der Werkzeugeinheit vorgesehene Laserentfernungs-Messeinrichtung eine relative Entfernung zu einem gegebenen Bezugspunkt BP bestimmt.

Ferner ist, wie voranstehend bereits erwähnt, eine vorteilhafte Ausführungsform für die Datenkommunikation zwischen der Zentralverarbeitungseinheit ZV und den einzelnen Steuereinheiten darin zu sehen, dass die Datenkommunikation über eine in der Laufschiene vorgesehene integrierte Datenschiene vorgenommen wird, wobei wiederum der Laufkasten 3-1, ...,.3-2, ..., 3n eine Datenabnahmeeinrichtung umfasst, um Daten von der Datenschiene abzunehmen und diese der jeweiligen Steuereinheit zuzuführen. Es ist jedoch auch möglich, dass die Datenverarbeitungseinrichtung mit den jeweiligen Steuereinheiten über Kommunikationssignale kommuniziert, die auf die in der Stromschiene vorhandenen Stromsignale moduliert sind.

Die Zentralverarbeitungseinrichtung ZV kann aber mit den Steuereinheiten auch über eine Funkschnittstelle oder eine Infrarotschnittstelle kommunizieren. Derartige Kommunikationen werden, wie voranstehend erwähnt, deshalb vorgenommen, um vorgegebene Bearbeitungsparametersätze und deren Zuordnung zu Positionsbereichen, sowie eine Rückkopplung von erfassten Daten während des Bearbeitungsvorgangs an die Zentralverarbeitungseinrichtung ZV vornehmen zu können.

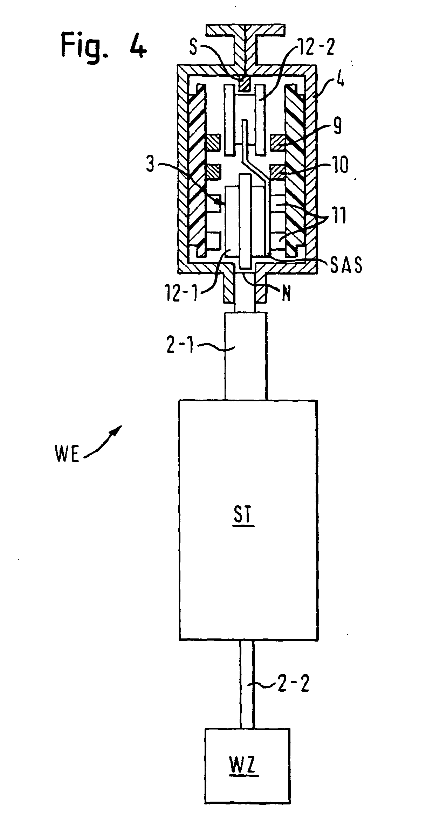

Ein Beispiel einer Werkzeugeinheit WE ist in Fig. 4 zusammen mit einer Laufschiene 4 gezeigt. In Fig. 4 bezeichnet das Bezugszeichen 4 die Laufschiene, die unten offen ist, wobei die Halteeinrichtung 3 gebildet aus zwei Rollen 12-1, 12-2 mit einer entsprechenden Befestigungseinrichtung in diesen Laufkasten 4 eingehängt ist. Eine vertikale Führung wird durch die Nut N und durch den Steg S bereitgestellt. Die Energieversorgung wird über zwei Leiter 11 vorgenommen, die in die Laufschiene 4 integriert sind. Wie in Fig. 4 dargestellt, umfasst die Halteeinrichtung dafür einen Stromabnehmerschleifer SAS, der die Stromschienen 11 kontaktiert.

Ferner kann in der Laufschiene 4 eine Datenleitung 10 und ein Wegemeßsystem 9 für die Positionsbestimmung vorgesehen sein. Der Laufkasten oder die Laufkatze 3 umfasst auch Abnahmeeinrichtungen beispielsweise zur Messung des Widerstands der Positionsbestimmungsschiene 9 und eine Datenabnahmeeinrichtung zur Abnahme bzw. Einspeisung von Datensignalen in die Datenleitung 10.

Die Bezugszeichen 2-1, 2-2 bezeichnen Verbindungsstangen zur Steuereinheit ST bzw. zum Werkzeug WZ.

Andere Ausführungsformen der Stromschiene 4, beispielsweise mit einem U-förmigen Profil, welches oben offen ist, sind ebenfalls möglich. Ferner ist es möglich, die Positionsbestimmung über einen Rotationssensor in den jeweiligen Rollen 12-1, 12-2 vorzunehmen, vorausgesetzt, dass kein Durchrutschen der Rollen entlang der Längsrichtung der Laufschiene 4 auftritt. Wie mit der Ausführungsform in Fig. 4 gezeigt, ist es durch die Anordnung der integrierten Stromschiene 11, der integrierten Datenleitung 10, und der integrierten Wegemessleitung 9 möglich, das Bearbeitungswerkzeug WZ mit geeigneten Parametern zu steuern, Energie ohne einen Kabelschlepp zuzuführen und insbesondere ein einfaches Umtakten und Erweitern des Montagesystems vorzunehmen. Dieses kabelschlepplose Montagesystem wird deshalb als Schienennetzwerk-Montagesystem oder Railnet-Montagesystem bezeichnet.

### GEWERBLICHE ANWENDBARKEIT

Wie voranstehend erläutert, wird bei dem erfindungsgemäßen Bearbeitungssystem und bei den erfindungsgemäßen Werkzeugeinheiten ermöglicht, eine Montagelinie in flexibler Weise und bedienerfreundlich umzutakten und umzukonfigurieren. Obwohl voranstehend vereinzelt Bezugnahmen auf Automobilfertigungsstraßen durchgeführt wurden, ist die vorliegende Erfindung nicht darauf beschränkt, sondern kann in einer Vielzahl von anderen Anwendungsfällen verwendet werden, beispielsweise in der Serienfertigung von Hifi-Produkten, Waschmaschinen,
Halbleiterbestückungsvorrichtungen, etc., bei denen eine abschnittsweise Bearbeitung von Werkstücken vorgenommen wird.

## Patentansprüche

1. Bearbeitungssystem (SYS) zur Bearbeitung von Werkstücken, insbesondere von auf einer Fertigungsstraße angeordneten Werkstücken, umfassend:
a) eine Vielzahl von Werkzeugeinheiten (WE1, WE2, WEn) jeweils mit einem elektrischen steuerbaren Bearbeitungswerkzeug (WZ1, WZ2, WZn) und einer Halteeinheit (3-1), (3-2), (3-n);
b) eine Verschiebehalteeinrichtung (4), in der die Halteeinheiten sequentiell aufgenommen sind, wobei die Halteeinheiten in der Verschiebehalteeinrichtung verschiebbar aufgenommen sind; und
c) eine Vielzahl von Steuereinheiten (ST1, ST2, STn) jeweils zur Einstellung eines jeweiligen Bearbeitungswerkzeugs auf einen Satz von vorgegebenen Bearbeitungsparametern zur Ausführung eines vorgegebenen Bearbeitungsvorgangs;
***dadurch gekennzeichnet, dass***
d) jede Werkzeugeinheit eine PositionsbestimmungsEinheit (PBE1, PBE2, PBEn) umfasst, die die Position der jeweiligen Werkzeugeinheit entlang der Verschiebehalteeinrichtung bestimmt;
e) die Steuereinheit Teil der Werkzeugeinheit ist; und
f) die Steuereinheit die Einstellung des jeweiligen Bearbeitungswerkzeugs auf einen jeweiligen Bearbeitungsparametersatz in Abhängigkeit von der durch die Positionsbestimmungseinheit bestimmten Position der Werkzeugeinheit vornimmt.

2. Bearbeitungssystem nach Anspruch 1,
**dadurch *gekennzeichnet, dass***
in den Steuereinheiten der jeweiligen Werkzeugeinheiten eine Vielzahl von Bearbeitungsparametersätzen jeweils bestimmten Positionsbereichen der Werkzeugeinheit zugeordnet gespeichert sind.

3. Bearbeitungssystem nach Anspruch 1 oder 2,
**dadurch *gekennzeichnet, dass***
eine Zentralverarbeitungseinheit vorgesehen ist, die in den jeweiligen Steuereinheiten die Bearbeitungsparametersätze einstellt.

4. Bearbeitungssystem nach Anspruch 2 und 3,
***dadurch gekennzeichnet, dass***
bei Einfügung einer neuen Werkzeugeinheit in die Verschiebhalteeinrichtung die Zentralverarbeitungseinheit die Bearbeitungsparametersätze und/oder die Positionsbereiche neu konfiguriert.

5. Bearbeitungssystem nach Anspruch 1,
***dadurch gekennzeichnet, dass***
eine Energiezuführungseinrichtung vorgesehen ist, zur Zuführung von Energie jeweils an die Steuereinheiten, wobei die Energiezuführungseinrichtung Teil der Verschiebehalteinrichtung ist und die Verschiebehalteeinrichtung und die Halteeinheiten so ausgebildet sind, dass die elektrische Energie unabhängig von der Position der Werkzeugeinheit mindestens an die Steuereinheit der Werkzeugeinheiten geliefert wird.

6. Bearbeitungssystem nach Anspruch 1,
***dadurch gekennzeichnet, dass***
die Verschiebehalteinrichtung eine Laufschiene ist und die Halteinheit ein in die Halteschiene eingehängter Laufkasten ist.

7. Bearbeitungssystem nach Anspruch 6 und 5,
***dadurch gekennzeichnet, dass***
in die Laufschiene ein Stromleiter integriert ist und die Laufkästen eine Stromabnehmereinrichtung umfassen, zur Abnahme und Zuführung von Strom an die jeweilige Steuereinheit.

8. Bearbeitungssystem nach Anspruch 1,
***dadurch* gekennzeichnet, *dass***
die Positionsbestimmungseinrichtung die relative Entfernung zu einem Bezugpunkt entlang der Verschiebehalteeinrichtung bestimmt.

9. Bearbeitungssystem nach Anspruch 8 und 6,
***dadurch gekennzeichnet, dass***
zumindest ein Teil der Laufschiene aus einem leitfähigem Material gebildet ist, die Zentralverarbeitungseinrichtung eine vorgegebene Messspannung an den leitfähigen Teil anlegt und die Positionsbestimmungseinrichtung zur Positionsbestimmung den Spannungsabfall entlang der Stromschiene misst.

10. Bearbeitungssystem nach Anspruch 8 und 6,
***dadurch gekennzeichnet, dass***
in die Laufschiene ein Widerstandsmessstreifen integriert ist und die Positionsbestimmungseinrichtung zur Positionsbestimmung den Widerstand entlang der Stromschiene misst.

11. Bearbeitungssystem nach Anspruch 8 und 6,
***dadurch gekennzeichnet, dass***
die Positionsbestimmungseinrichtung zur Positionsbestimmung eine Laserentfernungsmessung zum Bezugspunkt ausführt.

12. Bearbeitungssystem nach Anspruch 1,
***dadurch gekennzeichnet, dass***
eine Werkstückpositionsbestimmungseinrichtung vorgesehen ist, zur Bestimmung der Position der jeweiligen Werkstücke auf einer Fertigungsstraße, über der die Verschiebehalteeinrichtung vorgesehen ist.

13. Bearbeitungssystem nach Anspruch 1,
***dadurch gekennzeichnet, dass***
die Werkstückpositionsbestimmungseinrichtung eine Werkstückgeschwindigkeits-Erfassungseinrichtung umfasst.

14. Bearbeitungssystem nach Anspruch 1,
***dadurch gekennzeichnet, dass***
die Zentralverarbeitungseinrichtung eine vorgegebene Energie an die Energiezuführungseinrichtung liefert.

15. Bearbeitungssystem nach Anspruch 14,
***dadurch gekennzeichnet, dass***
die Zentralverarbeitungseinrichtung einen Spannungswandler umfasst.

16. Bearbeitungssystem nach Anspruch 14,
***dadurch gekennzeichnet, dass***
jede Werkzeugeinheit einen Spannungswandler umfasst.

17. Bearbeitungssystem nach Anspruch 3,
***dadurch gekennzeichnet, dass***
die Zentralverarbeitungseinrichtung mit den jeweiligen Steuereinheiten die Einstellung über eine Funk- oder Infrarotschnittstelle vornimmt.

18. Bearbeitungssystem nach Anspruch 6,
***dadurch gekennzeichnet, dass***
die Zentralverarbeitungseinrichtung mit den jeweiligen Steuereinheiten die Einstellung der Bearbeitungsparametersätze über eine in der Laufschiene vorgesehene integrierte Datenschiene vornimmt, wobei der Laufkasten eine Datenabnahmeeinrichtung umfasst, zur Abnahme der Daten von der Datenschiene und zur Zuführung an die jeweilige Steuereinheit.

19. Bearbeitungssystem nach Anspruch 6,
***dadurch gekennzeichnet, dass***
die Zentralverarbeitungseinrichtung mit den jeweiligen Steuereinheiten über Kommunikationssignale kommuniziert, die auf die Stromschiene moduliert sind.

20. Bearbeitungssystem nach Anspruch 6,
***dadurch gekennzeichnet, dass***
das Bearbeitungswerkzeug ein handgeführtes Einzelwerkzeug oder ein Mehrfachbearbeitungswerkzeug ist.

21. Werkzeugeinheit (WE1, WE2, WEn) eines Bearbeitungssystems (SYS) zur Bearbeitung von Werkstücken, insbesondere von auf einer Fertigungsstraße angeordneten Werkstücken, umfassend:
a) ein elektrisch steuerbares Bearbeitungswerkzeug (WZ1, WZ2, WZn); und
b) eine Halteeinheit (3-1), (3-2), (3-n) zur Aufnahme in eine Verschiebehalteeinrichtung (4) des Bearbeitungssystems (SYS);
***dadurch gekennzeichnet, dass***
c) eine Steuereinheit (ST1, ST2, STn) vorgesehen ist, zur Einstellung des Bearbeitungswerkzeugs auf einen Satz von vorgegebenen Bearbeitungsparametern zur Ausführung eines vorgegebenen Bearbeitungsvorgangs;
d) jede Werkzeugeinheit teine PositionsbestimmungsEinheit (PBE1, PBE2, PBEn) umfasst, die die Position der jeweiligen Werkzeugeinheit entlang der Verschiebehalteeinrichtung bestimmt; und
e) die Steuereinheit die Einstellung des jeweiligen Bearbeitungswerkzeugs auf einen jeweiligen Bearbeitungsparametersatz in Abhängigkeit von der durch die Positionsbestimmungseinheit bestimmten Position der Werkzeugeinheit vornimmt.

22. Werkzeugeinheit nach Anspruch 20,
***dadurch gekennzeichnet, dass***
in der Steuereinheit eine Vielzahl von Bearbeitungsparametersätzen jeweils bestimmten Positionsbereichen der Werkzeugeinheit zugeordnet gespeichert sind.

23. Werkzeugeinheit nach Anspruch 20,
***dadurch gekennzeichnet, dass***
die Halteinheit ein eingehängter Laufkasten ist.

24. Werkzeugeinheit nach Anspruch 23,
***dadurch gekennzeichnet, dass***
der Laufkasten eine Stromabnehmereinrichtung umfasst.

25. Werkzeugeinheit nach Anspruch 20,
***dadurch gekennzeichnet, dass***
die Positionsbestimmungseinrichtung die relative Entfernung zu einem Bezugpunkt entlang der Verschiebehalteeinrichtung bestimmt.

26. Werkzeugeinheit nach Anspruch 20,
***dadurch gekennzeichnet, dass***
Positionsbestimmungseinrichtung zur Positionsbestimmung den Spannungsabfall oder den Widerstands entlang einer Stromschiene misst.

27. Werkzeugeinheit nach Anspruch 20,
**dadurch *gekennzeichnet, dass***
die Positionsbestimmungseinrichtung zur Positionsbestimmung eine Laserentfernungsmessung ausführt.

28. Werkzeugeinheit nach Anspruch 6,
***dadurch gekennzeichnet, dass***
das Bearbeitungswerkzeug ein handgeführtes Einzelwerkzeug oder ein Mehrfachbearbeitungswerkzeug ist.

29. Werkzeugeinheit nach Anspruch 6,
***dadurch gekennzeichnet, dass***
eine Alarmeinrichtung in der Steuereinheit vorgesehen ist, zur Ausgabe eines Alarms, wenn die Steuereinheit aufgrund der von der Positionsbestimmungseinrichtung bestimmten Position bestimmt, dass eine Positionsbereichsüberschreitung stattgefunden hat.

30. Bearbeitungssystem nach Anspruch 1,
***dadurch gekennzeichnet, dass***
eine Alarmeinrichtung in der Steuereinheit vorgesehen ist, zur Ausgabe eines Alarms, wenn die Steuereinheit aufgrund der von der Positionsbestimmungseinrichtung bestimmten Position bestimmt, dass eine Positionsbereichsüberschreitung stattgefunden hat.

## Claims

1. Machining system (SYS) for machining work pieces, in particular work pieces arranged on a production line, including:
a) a plurality of tool units (WE1, WE2, WEn) each with an electrically controllable machining tool (WZ1, WZ2, WZn) and a holding unit (3-1), (3-2), (3-n) ;
b) a sliding holding device (4) in which the holding units are held sequentially, wherein the holding units are held slidably in the sliding holding device; and
c) a plurality of control units (ST1, ST2, STn) each for adjusting a respective machining tool to a set of predetermined machining parameters for carrying out a predetermined machining operation;
**characterised in that**
d) each tool unit includes a position-determining unit (PBE1, PBE2, PBEn) which determines the position of the respective tool unit along the sliding holding device;
e) the control unit forms part of the tool unit; and
f) the control unit performs adjustment of the respective machining tool to a respective set of machining parameters as a function of the position of the tool unit determined by the position-determining unit.

2. Machining system according to claim 1, **characterised in that** in the control units of the respective tool units are stored a plurality of sets of machining parameters each assigned to certain position regions of the tool unit.

3. Machining system according to claim 1 or 2, **characterised in that** a central processing unit is provided, which in the respective control units adjusts the sets of machining parameters.

4. Machining system according to claims 2 and 3, **characterised in that**, upon insertion of a new tool unit in the sliding holding device, the central processing unit reconfigures the sets of machining parameters and/or the position regions.

5. Machining system according to claim 1, **characterised in that** an energy supply device is provided, for the supply of energy in each case to the control units, the energy supply device forming part of the sliding holding device, and the sliding holding device and holding units being designed in such a way that the electrical energy is delivered at least to the control unit of the tool units irrespective of the position of the tool unit.

6. Machining system according to claim 1, **characterised in that** the sliding holding device is a running rail and the holding unit is a running box suspended from the holding rail.

7. Machining system according to claims 6 and 5, **characterised in that** a conductor is integrated in the running rail and the running boxes include a current collector device, for the collection and delivery of current to the respective control unit.

8. Machining system according to claim 1, **characterised in that** the position-determining device determines the relative distance from a reference point along the sliding holding device.

9. Machining system according to claims 8 and 6, **characterised in that** at least a portion of the running rail is formed from a conductive material, the central processing device applies a predetermined measuring voltage to the conductive portion, and the position-determining device measures the voltage drop along the conductor rail for position determining.

10. Machining system according to claims 8 and 6, **characterised in that** a resistance-measuring strip is integrated in the running rail and the position-determining device measures the resistance along the conductor rail for position determining.

11. Machining system according to claims 8 and 6, **characterised in that** the position-determining device carries out laser measurement of the distance from the reference point for position determining.

12. Machining system according to claim 1, **characterised in that** a work piece position-determining device is provided, for determining the position of the respective work pieces on a production line, over which the sliding holding device is provided.

13. Machining system according to claim 1, **characterised in that** the work piece position-determining device includes a work piece speed-detecting device.

14. Machining system according to claim 1, **characterised in that** the central processing device delivers a predetermined energy to the energy supply device.

15. Machining system according to claim 14, **characterised in that** the central processing device includes a voltage transformer.

16. Machining system according to claim 14, **characterised in that** each tool unit includes a voltage transformer.

17. Machining system according to claim 3, **characterised in that** the central processing device with the respective control units performs the adjustment via a radio or infrared interface.

18. Machining system according to claim 6, **characterised in that** the central processing device with the respective control units performs adjustment of the sets of machining parameters via an integrated data rail provided in the running rail, wherein the running box includes a data collection device, for collection of the data from the data rail and for delivery to the respective control unit.

19. Machining system according to claim 6, **characterised in that** the central processing device with the respective control units communicates via communications signals which are modulated on the conductor rail.

20. Machining system according to claim 6, **characterised in that** the machining tool is a hand-held single tool or a multiple machining tool.

21. Tool unit (WE1, WE2, WEn) of a machining system (SYS) for machining work pieces, in particular work pieces arranged on a production line, including:
a) an electrically controllable machining tool (WZ1, WZ2, WZn); and
b) a holding unit (3-1), (3-2), (3-n) for inclusion in a sliding holding device (4) of the machining system (SYS);
**characterised in that**
c) a control unit (ST1, ST2, STn) is provided, for adjustment of the machining tool to a set of predetermined machining parameters for carrying out a predetermined machining operation;
d) each tool unit includes a position-determining unit (PBE1, PBE2, PBEn) which determines the position of the respective tool unit along the sliding holding device; and
e) the control unit performs adjustment of the respective machining tool to a respective set of machining parameters as a function of the position of the tool unit determined by the position-determining unit.

22. Tool unit according to claim 20, **characterised in that** in the control unit are stored a plurality of sets of machining parameters each assigned to certain position regions of the tool unit.

23. Tool unit according to claim 20, **characterised in that** the holding unit is a suspended running box.

24. Tool unit according to claim 23, **characterised in that** the running box includes a current collector device.

25. Tool unit according to claim 20, **characterised in that** the position-determining device determines the relative distance from a reference point along the sliding holding device.

26. Tool unit according to claim 20, **characterised in that** the position-determining device measures the voltage drop or the resistance along a conductor rail for position determining.

27. Tool unit according to claim 20, **characterised in that** the position-determining device carries out laser measurement of the distance for position determining.

28. Tool unit according to claim 6, **characterised in that** the machining tool is a hand-held single tool or a multiple machining tool.

29. Tool unit according to claim 6, **characterised in that** an alarm device is provided in the control unit, for the emission of an alarm when, on the basis of the position determined by the position-determining device, the control unit determines that a position region has been exceeded.

30. Machining system according to claim 1, **characterised in that** an alarm device is provided in the control unit, for the emission of an alarm when, on the basis of the position determined by the position-determining device, the control unit determines that a position region has been exceeded.

## Revendications

1. Système d'usinage (SYS) pour l'usinage de pièces d'oeuvre, en particulier de pièce d'oeuvres disposées sur une chaîne de fabrication, comprenant :
a) une pluralité d'unités d'outillage (WE1,WEZ,WEn), chacune avec un outil d'usinage (WZ1,WZ2,WZn), pouvant être commandé électriquement, et une unité de maintien (3-1), (3-2), (3-n);
b) un dispositif de maintien en déplacement (4) dans lequel les unités de maintien sont logées séquentiellement, les unités de maintien étant logées de façon à être déplaçables dans le dispostif de maintien en déplacement ; et
c) une pluralité d'unités de commande (ST1,ST2,STn), chacune pour régler un outil d'usinage respectif à un jeu de paramètres d'usinage prédéterminés, pour accomplir un processus d'usinage prédéterminé ;
**caractérisé en ce que**
d) chaque unité d'outillage comprend une unité de détermination de position, déterminant la position de l'unité d'outillage respective le long du dispositif de maintien en déplacement ;
e) L'unité de commande fait partie de l'unité d'outillage ; et
f) l'unité de commande procède au réglage de l'unité d'usinage respective à un jeu de paramètres d'usinage respectifs, en fonction de la position, ayant été déterminée par l'unité de détermination de position, de l'unité d'outillage.

2. Système d'usinage selon la revendication 1,
**caractérisé en ce que**,
dans les unités de commande des unités d'outillage respectives, sont mémorisées une pluralité de jeux de paramètres d'usinage, chacun associé à des zones de positions déterminées de l'unité d'outillage.

3. Système d'usinage selon la revendication 1 ou 2,
**caractérisé en ce qu'**
une unité centrale de traitement est prévue, réglant les jeux de paramètres d'usinage dans les unités de commande respectives.

4. Système d'usinage selon la revendication 2 ou 3,
**caractérisé en ce que**,
à l'introduction d'une nouvelle unité d'usinage dans le dispositif de maintien en déplacement, l'unité centrale de traitement procède à une nouvelle configuration des jeux de paramètres d'usinage et/ou des zones de position.

5. Système d'usinage selon la revendication 1,
**caractérisé en ce qu'**
est prévu un dispositif de fourniture d'énergie, pour amener de l'énergie chaque fois aux unités de commande, sachant que le dispositif de fourniture d'énergie fait partie du dispositif de maintien en déplacement et le dispositif de maintien en déplacement et les unités de maintien étant réalisées de manière que l'énergie électrique soit fournie, indépendamment de la position de l'unité d'outillage, au moins à l'unité de commande des unités d'outillage.

6. Système d'usinage selon la revendication 1,
**caractérisé en ce que**
l'unité de maintien en déplacement est une glissière de déplacement et l'unité de maintien est un caisson mobile, suspendu dans la glissière de maintien.

7. Système d'usinage selon les revendications 6 et 5,
**caractérisé en ce que**,
dans la glissière de déplacement, est intégré un conducteur électrique et les caissons mobiles comprennent un dispositif de prélèvement de courant, pour prélever du courant et le fournir à l'unité de commande respective.

8. Système d'usinage selon la revendication 1,
**caractérisé en ce que**
le dispositif de détermination de position procède à la détermination de l'espacement relatif par rapport à un point de référence le long du dispositif de maintien en déplacement.

9. Système d'usinage selon les revendications 8 et 6,
**caractérisé en ce qu'**
au moins une partie de la glissière de déplacement est formée d'un matériau conducteur, le dispositif central de traitement applique une tension de mesure prédéterminée à la partie conductrice, et le dispositif de détermination de position, pour déterminer la position, mesure la chute de tension le long de la barre électrique.

10. Système d'usinage selon les revendications 8 et 6,
**caractérisé en ce qu'**
un ruban résistif est intégré dans la glissière de déplacement et le dispositif de détermination de position, pour mesurer la position, mesure la résistance le long de la barre électrique.

11. Système d'usinage selon les revendications 8 et 6,
**caractérisé en ce que**
le dispositif de détermination de position, pour effectuer la détermination de position, effectue une mesure au laser, d'éloignement par rapport au point de référence.

12. Système d'usinage selon la revendication 1,
**caractérisé en ce qu'**
est prévu un dispositif de détermination de position de la pièce d'oeuvre pour déterminer la position des pièces d'oeuvres respectives sur une chaîne de fabrication, sur laquelle est prévue le dispositif de maintien en déplacement.

13. Système d'usinage selon la revendication 1,
**caractérisé en ce que**
le dispositif de détermination de position de pièce d'oeuvre comprend un dispositif de détection de vitesse de pièces d'oeuvre.

14. Système d'usinage selon la revendication 1,
**caractérisé en ce que**
le dispositif central de traitement fournit une énergie prédéterminée au dispositif de fourniture d'énergie.

15. Système d'usinage selon la revendication 14,
**caractérisé en ce que**
le dispositif central de traitement comprend un convertisseur de tension.

16. Système d'usinage selon la revendication 14,
**caractérisé en ce que**
chaque unité d'outillage comprend un convertisseur de tension.

17. Système d'usinage selon la revendication 3,
**caractérisé en ce que**
le dispositif central de traitement effectue le réglage, avec les unités de commande respectives, par l'intermédiaire d'une interface radio ou par infrarouge.

18. Système d'usinage selon la revendication 6,
**caractérisé en ce que**
le dispositif central de traitement effectue, avec les unités de commande respectives, le réglage des jeux de paramètres d'usinage, par l'intermédiaire d'un rail de données intégré, prévu dans la glissière de déplacement, sachant que le caisson mobile comprend un dispositif de prélèvement de données, pour prélever les données depuis le rail de données et pour fourniture à l'unité de commande respective.

19. Système d'usinage selon la revendication 6,
**caractérisé en ce que**
le dispositif central de traitement communique avec les unités de commande, par l'intermédiaire de signaux de communication modulés, sur la barre de courant.

20. Système d'usinage selon la revendication 6,
**caractérisé en ce que**
l'outil d'usinage est un outil individuel ou un outil d'usinage multiple, conduit à la main.

21. Unité d'outillage (WE1,WE2,WEn) d'un système d'usinage (SYS) pour l'usinage de pièces d'oeuvre, en particulier de pièces d'oeuvres disposées sur une chaîne de fabrication, comprenant :
a) un système d'usinage (WZ1,WZ2,WZn) susceptible d'être commandé électriquement ; et
b) une unité de maintien (3-1), (3-2), (3-n) devant être loger dans un dispositif de maintien en déplacement (4) du système d'usinage (SYS) ;
**caractérisé en ce que**
c) une unité de commande (ST1, ST2, STn) est prévue pour régler l'outil d'usinage à un jeu de paramètres d'usinage prédéterminé, pour accomplir un processus d'usinage prédéterminé ;
d) chaque unité d'outillage comprend une unité de détermination de position (PBE1, PBE2, PBEn), déterminant la position de l'unité d'outillage respective le long des dispositifs de maintien en déplacement ; et
e) l'unité de commande effectue le réglage de l'outil d'usinage respectif à un jeu de paramètres d'usinage respectifs, en fonction de la position d'unité d'outillage, ayant été déterminée par l'unité de détermination de position.

22. Une unité d'outillage selon la revendication 20,
**caractérisé en ce que**,
dans l'unité de commande, sont mémorisés une pluralité de jeux de paramètres d'usinage, chacun associé à des zones de position de l'unité d'outillage.

23. Unité d'outillage selon la revendication 20,
**caractérisé en ce que**
l'unité de maintien est un caisson mobile suspendu.

24. Unité d'outillage selon la revendication 23,
**caractérisé en ce que**
le caisson mobile comprend un dispositif de prélèvement de courant.

25. Unité d'outillage selon la revendication 20,
**caractérisé en ce que**
le dispositif de détermination de position détermine l'éloignement relatif par rapport à un point de référence, le long du dispositif de maintien en déplacement.

26. Unité d'outillage selon la revendication 20,
**caractérisé en ce que**
le dispositif de détermination de position, pour mesurer la position, mesure la chute de tension ou la résistance le long d'une barre électrique.

27. Unité d'outillage selon la revendication 20,
**caractérisé en ce que**
le dispositif de détermination de position effectue une mesure par laser de l'éloignement, pour déterminer la position.

28. Unité d'outillage selon la revendication 6,
**caractérisé en ce que**
l'outil d'usinage est un outil individuel ou un outil d'usinage multiple, conduit à la main.

29. Unité d'outillage selon la revendication 6,
**caractérisé en ce qu'**
un dispositif d'alarme est prévu dans l'unité de commande, pour émettre une alarme si, d'après la position ayant été déterminée par le dispositif de détermination de position, l'unité de commande détermine qu'un dépassement de zone de position s'est produit.

30. Système d'usinage selon la revendication 1,
**caractérisé en ce qu'**
un dispositif d'alarme est prévu dans l'unité de commande, pour émettre une alarme si, d'après la position ayant été déterminée par le dispositif de détermination de position, l'unité de commande détermine qu'un dépassement de zone de position s'est produit.
